# EUROPÄISCHE PATENTSCHRIFT

(11) **EP 1 354 726 B1**
(45) Veröffentlichungstag und Bekanntmachung des Hinweises auf die Patenterteilung: **23.08.2006**
(21) Anmeldenummer: 03000764.5
(22) Anmeldetag: 14.01.2003
(51) Int. Cl.: B60C 5/02, B60C 17/02, B60C 5/12, B60C 5/20, B60C 17/01

(54) **Fahrzeugrad mit einem Notlaufelement in einem Luftreifen**
Vehicle wheel with emergency tube inside the tire
Roue de véhicule comprenant une chambre à air pour roulage à plat

(30) Priorität: 19.03.2002 DE 10212031
(43) Veröffentlichungstag der Anmeldung: 22.10.2003
(73) Patentinhaber: DaimlerChrysler AG, 70567 Stuttgart (DE)
(72) Erfinder: Lehmann, Otto, 76571 Gaggenau (DE)

(56) Entgegenhaltungen:
- DE-A- 3 711 785
- FR-A- 2 579 142
- GB-A- 2 258 195

## Beschreibung

Die Erfindung betrifft ein Fahrzeugrad mit einem luftdrucküberwachten Luftreifen.

Ein solches Fahrzeugrad ist aus DE 28 39 208 A1 bekannt.

Bei einem solchen Fahrzeugrad wird das aus einem luftgefüllten Schlauch bestehende Notlaufelement aktiviert, sobald der Reifendruck unter einen vorgegebenen Grenzwert absinkt. In diesem Falle bewirkt der in dem Not-Schlauch vorhandene Druck aufgrund des gefallenen Reifendruckes und des damit gegenüber dem Reifendruck innerhalb des Not-Schlauches bestehenden Überdruckes eine schlagartige Ausdehnung des Not-Schlauches. Ursache für die schlagartige Ausdehnung ist, dass der Not-Schlauch mit einer auf einen vorgegebenen Grenzdruck ausgelegten Bandage versehen ist, die bei Überschreiten des Grenzdruckes aufreißt, das heißt wirkungslos wird.

Bei einem solchen Fahrzeugrad, bei dem der Luftreifen als solcher drucküberwacht ist mit beispielsweise einer Anzeige in dem Fahrerhaus, kann bei einem intakten Luftreifen ein Defekt an dem Not-Schlauch nicht festgestellt werden. Der Grund hierfür ist, dass ein gegenüber dem Reifeninneren undichter Not-Schlauch, auch wenn er einen geringfügig höheren Innendruck als der Luftreifen aufweist, den Innendruck des Luftreifens lediglich innerhalb eines Toleranzbereiches verändern kann, innerhalb dessen eine Druckerhöhung noch nicht angezeigt wird. Selbst in einem Fall, in dem aus dem Not-Schlauch Luft durch das Füllventil entweichen sollte, kann aus der in dem Luftreifen festgestellten Druckminderung nicht auf einen defekten Not-Schlauch geschlossen werden. Bei einem allmählichen Entweichen von Luft aus dem Not-Schlauch durch dessen Ventil zur Atmosphäre hin senkt sich der Druck innerhalb des Not-Schlauches allenfalls auf den Druck innerhalb des Luftreifens. So wird bei einer in dem Luftreifen festgestellten Druckminderung durch ein Nachfüllen von Luft in den Luftreifen die aus dem Not-Schlauch in die Atmosphäre entwichene Luft von der Überwachungseinrichtung unbemerkt ersetzt.

Aus der gattungsgemäßen DE 37 11785 ist ein Sicherheitsluftreifen mit einer im Reifen angeordneten flexiblen Hülle bekannt. Elektrische Mittel zeigen ein durch ein Defekt des Reifens verursachtes Anlegen der flexiblen Hülle an der Reifeninneseite an. Eine Funktionsüberwachung der flexiblen Hülle ist über die eletrischen Mittel nicht durchführbar.

Hier Abhilfe zu schaffen ist das Problem, mit dem sich die Erfindung beschäftigt und das sie durch eine Ausgestaltung eines gattungsgemäßen Fahrzeugrades nach den kennzeichnenden Merkmalen des Patentanspruchs 1 löst.

Zweckmäßige Ausgestaltungen der Erfindung sind Gegenstand der Unteransprüche.

Die Erfindung beruht auf dem allgemeinen Gedanken, dass ein Defekt an dem Not-Schlauch, der aus einem dehnbaren, elastischen Material besteht, zwangsläufig zu einer Formveränderung führen muss, wenn der Not-Schlauch in intaktem Zustand gegenüber dem Luftreifen einen Überdruck aufweist und dieser Überdruck bei einem Defekt abgebaut wird. Die Formveränderung besteht dabei in einem Zusammenziehen der Schlauchwand in Umfangsrichtung des Schlauches sowie über den Schlauchmantelumfang senkrecht zur Umfangsrichtung des Not-Schlauches.

Eine solche Formveränderung kann grundsätzlich mit jeder beliebigen Messeinrichtung erfasst werden, die hierfür in an sich bekannter Weise geeignet ist. Besonders vorteilhaft ist die Verwendung eines an einem Wandbereich des Not-Schlauches zu applizierenden an sich bekannten, üblichen Dehnmessstreifens, der Formveränderungen durch elektrische Widerstandsänderungen bei einem Anschluss an eine mit elektrischer Energie versorgte Messeinrichtung anzeigt. Eine solche, an den Not-Schlauch angeschlossene, Messeinrichtung wird zweckmäßigerweise in die Luftdrucküberwachungsanlage des Luftreifens integriert. Damit sind an einem gleichen Display Zustandsanzeigen für den Luftdruck in dem Luftreifen und zusätzlich in dem Not-Schlauch möglich. Für Defekt-Anzeigen bezüglich des Not-Schlauches werden in gleicher Weise wie bei der Defekt-Anzeige bezüglich des Luftreifens bestimmte Nichtanzeige-Toleranzgrenzen festgelegt.

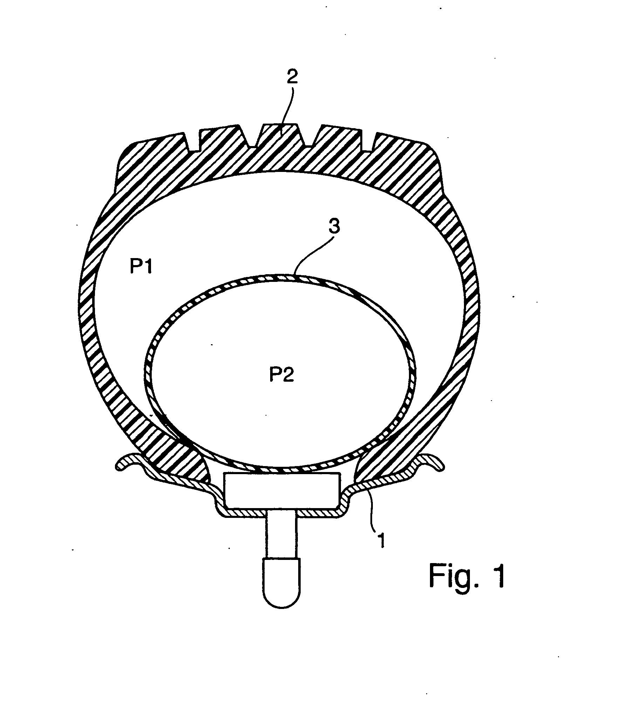

In der Zeichnung zeigt die einzige
- Fig. 1: ein Demonstrationsbeispiel anhand eines geschnitten dargestellten Fahrzeugrades.

Innerhalb eines auf der Felge 1 eines Fahrzeugrades luftdicht gelagerten Luftreifens 2 ist als Notlaufelement ein luftgefüllter Not-Schlauch 3 auf der Felge 1 anliegend vorgesehen.

Soll der normale Betriebs-Reifendruck bei beispielsweise p1 = 9 bar liegen, so kann in dem Not-Schlauch 3 durch einen Druck p2 = 9,5 bis 10 bar ein Überdruck von 0,5 bis 1 bar eingestellt werden. Der Not-Schlauch 3 ist auf seinem Außenumfang mit einer Bandage versehen, die bei einem Absinken des Reifendruckes unter beispielsweise 5 bar aufreißt, das heißt in einem solchen Maße unwirksam wird, dass sich der Not-Schlauch 3 an dem gegebenenfalls defekt gewordenen Luftreifen 3 direkt anlegen kann. In diesem Zustand ist dann ein Notbetrieb möglich.

Zur Feststellung eines Defektes an dem Not-Schlauch ist an einem Bereich von dessen Außenwand ein üblicher Dehnmessstreifen für eine elektrische Widerstandsmessung einsetzbar und auf einfache Weise in eine Luftdrucküberwachungsanlage des Luftreifens integrierbar. Die Applikation eines solchen Dehnmessstreifens an den Not-Schlauch 3 ist in der Zeichnung ebenso wie die Luftdrucküberwachungsanlage des Luftreifens nicht näher dargestellt, da hier ein üblicher an sich bekannter Aufbau zur Durchführung der Erfindung geeignet ist.

## Patentansprüche

1. Fahrzeugrad mit einem luftdrucküberwachten Luftreifen und einem in dessen Inneren mit radialem Abstand angeordneten, luftgefüllten, sich bei einem vorgebbaren Unterdruck in dem Luftreifen durch Ausdehnung vergrößernden Schlauch als Notlaufelement, der Not-Schlauch (3) zur Überwachung von dessen Innendruck mit einer eine Flächenveränderung eines Wandbereiches dieses Not-Schlauches (3) erfassenden und diese Veränderung nach außerhalb des Fahrzeugrades anzeigenden Messeinrichtung versehen ist
**dadurch gekennzeichnet, dass**
die Messeinrichtung einen an einem Wandbereich des Not-Schlauches (3) applizierten, elektrische Widerstandsänderungen bewirkenden, an sich bekannten Dehn-Messstreifen umfasst.

2. Fahrzeugrad nach Anspruch 1,
**dadurch gekennzeichnet,**
**dass** die Energieversorgung und Auswertung der Messeinrichtung in eine an sich bekannte Luftreifen-Drucküberwachungsanlage integriert ist.

3. Fahrzeugrad nach einem der vorhergehenden Ansprüche,
**dadurch gekennzeichnet,**
**dass** die Messeinrichtung eine Vorrichtung umfasst, mit der ein von einem mit einem vorgegebenen Druck gefüllten Not-Schlauch (3) angezeigter Messwert als Referenzwert für zu erfassende Formveränderungen festlegbar ist.

## Claims

1. Vehicle wheel with an air-pressure-monitored pneumatic tyre inside which, at a radial separation therefrom, is arranged as an emergency running element and air-filled inner tube which can expand when a specifiable underpressure exists in the pneumatic tyre, the emergency inner tube (3) being provided, for the purpose of monitoring its internal pressure, with a measurement device which detects a variation of the area of a wall region of the said emergency inner tube (3) and displays the said variation outside the vehicle wheel,
**characterised in that**
the said measurement device comprises a strain gauge known in itself, of the type which brings about changes of electrical resistance, and is applied on a wall area of the emergency inner tube (3).

2. Vehicle wheel according to Claim 1,
**characterised in that**
the energy supply to and evaluation of the measurement device are integrated in a pneumatic tyre pressure monitoring unit known in itself.

3. Vehicle wheel according to either of the preceding claims,
**characterised in that**
the measurement device comprises means whereby a displayed measurement value from an emergency inner tube (3) inflated to a specified pressure can be adopted as the reference value for changes of shape to be detected.

## Revendications

1. Roue de véhicule, comportant un pneumatique à pression d'air contrôlée et une chambre à air, sous forme d'élément de roulement de secours, qui est agencée à distance radiale à l'intérieur dudit pneumatique et qui s'agrandit par dilatation en présence d'une dépression prédéfinissable dans le pneumatique, la chambre à air de secours (3), en vue de contrôler sa pression intérieure, est munie d'un dispositif de mesure détectant une variation de surface d'une zone de paroi de cette chambre à air de secours (3) et signalant cette variation à l'extérieur de la roue de véhicule, **caractérisée en ce que** le dispositif de mesure comporte un extensomètre à résistance, connu en soi, appliqué contre une zone de paroi de la chambre à air de secours (3) et provoquant des variations de résistance électrique.

2. Roue de véhicule selon la revendication 1, **caractérisée en ce que** l'alimentation en énergie et l'analyse du dispositif de mesure sont intégrées dans un système de contrôle de pression du pneumatique, connu en soi.

3. Roue de véhicule selon l'une quelconque des revendications précédentes, **caractérisée en ce que** le dispositif de mesure comporte un dispositif, par lequel une valeur de mesure affichée d'une chambre à air de secours (3), remplie d'une pression prédéfinie, peut être définie comme une valeur de référence pour les variations de forme à détecter.
